(19) Europäisches Patentamt

European Patent Office

Office européen des brevets

(11) **EP 0 865 944 B1**

(12) **FASCICULE DE BREVET EUROPEEN**

(45) Date de publication et mention
de la délivrance du brevet:
**28.05.2003 Bulletin 2003/22**

(51) Int Cl.⁷: $B60G\ 17/015$, $B60G\ 21/055$

(21) Numéro de dépôt: **98400548.8**

(22) Date de dépôt: **09.03.1998**

(54) **Dispositif anti-dévers pour un véhicule automobile**

Antirollvorrichtung für ein Kraftfahrzeug

Anti-roll device for a motor vehicle

(84) Etats contractants désignés:
**CH DE ES GB IT LI PT SE**

(30) Priorité: **19.03.1997 FR 9703359**

(43) Date de publication de la demande:
**23.09.1998 Bulletin 1998/39**

(73) Titulaires:
• **AUTOMOBILES PEUGEOT**
**75116 Paris (FR)**
• **AUTOMOBILES CITROEN**
**92200 Neuilly-sur-Seine (FR)**

(72) Inventeurs:
• **Vieille, Philippe**
**92310 Servres (FR)**
• **Halconruy, Thierry**
**78000 Versailles (FR)**

(74) Mandataire: **Thinat, Michel et al**
**Cabinet Weinstein,**
**56 A, rue du Faubourg Saint-Honoré**
**75008 Paris (FR)**

(56) Documents cités:
**EP-A- 0 234 808**      **EP-A- 0 345 817**
**EP-A- 0 354 113**      **EP-A- 0 439 979**
**DE-A- 4 337 765**      **US-A- 5 480 186**

• PATENT ABSTRACTS OF JAPAN vol. 014, no. 361 (M-1006), 6 août 1990 & JP 02 128910 A (FUJI HEAVY IND LTD), 17 mai 1990,
• PATENT ABSTRACTS OF JAPAN vol. 013, no. 282 (M-843), 28 juin 1989 & JP 01 078914 A (MASAKAZU IGUCHI;OTHERS: 01), 24 mars 1989,
• PATENT ABSTRACTS OF JAPAN vol. 015, no. 073 (M-1084), 20 février 1991 & JP 02 296513 A (NISSAN MOTOR CO LTD), 7 décembre 1990,
• PATENT ABSTRACTS OF JAPAN vol. 095, no. 011, 26 décembre 1995 & JP 07 228114 A (TOYOTA MOTOR CORP), 29 août 1995,
• PATENT ABSTRACTS OF JAPAN vol. 016, no. 519 (M-1330), 26 octobre 1992 & JP 04 191108 A (MITSUBISHI MOTORS CORP), 9 juillet 1992,

Il est rappelé que: Dans un délai de neuf mois à compter de la date de publication de la mention de la délivrance du brevet européen, toute personne peut faire opposition au brevet européen délivré, auprès de l'Office européen des brevets. L'opposition doit être formée par écrit et motivée. Elle n'est réputée formée qu'après paiement de la taxe d'opposition. (Art. 99(1) Convention sur le brevet européen).

# Description

La présente invention concerne un dispositif anti-dévers pour un véhicule automobile.

On connaît par le document FR-A-2 635 729 un tel dispositif comprenant essentiellement deux trains de roues respectivement avant et arrière liées à la caisse du véhicule d'une part au moyen de bras montés oscillants autour d'un axe par rapport à la caisse et d'autre part au moyen d'éléments de suspension, un premier vérin anti-dévers monté articulé sur l'élément de suspension de l'une des roues avant et à l'une des extrémités d'une barre anti-dévers avant transversale au véhicule, un second vérin anti-dévers monté articulé sur l'élément de suspension de l'une des roues arrière et à l'une des extrémités d'une barre anti-dévers arrière transversale au véhicule, et des moyens de commande hydraulique pouvant commander les premier et second vérins anti-dévers pour exercer aux trains avant et arrière un couple anti-dévers lors d'un mouvement relatif des bras par rapport à la caisse.

Dans ce dispositif connu, qui comporte ainsi deux vérins dissymétriques reliés aux barres anti-dévers, le rapport du couple anti-dévers au train avant au couple anti-dévers au train arrière, ou rapport anti-dévers, est fixe, et un asservissement hydromécanique simple de l'angle de roulis à une consigne nulle est réalisé. Dans ces conditions, ce dispositif connu ne s'adapte pas toujours à la situation de roulage du véhicule, étant donné que le rapport anti-dévers d'un véhicule a une répercussion sur la stabilité directionnelle de ce véhicule.

La présente invention propose un dispositif anti-dévers, comme défini par les revendications 1 ou 5, permettant à un véhicule de se déplacer dans un virage avec la caisse de celui-ci sensiblement parallèle au sol, c'est-à-dire de conserver l'angle de roulis nul, et permettant également d'adapter la stabilité directionnelle du véhicule en obtenant, notamment, un effet survireur du véhicule entrant dans le virage et un effet sous-vireur en cas de décélération dans le virage.

Les préambules de ces revendications sont respectivement divulgués dans le résumé du document JP-A-02128910, et dans le document EP-A-0234 808.

D'autres variantes de réalisation sont définies par les revendications dépendantes 2 à 4 et 6 à 7, respectivement.

L'invention sera mieux comprise et d'autres buts, caractéristiques, détails et avantages de celle-ci apparaîtront plus clairement au cours de la description explicative qui va suivre faite en référence aux dessins schématiques annexés donnés uniquement à titre d'exemple illustrant un mode de réalisation de l'invention et dans lesquels :

La figure 1 est une vue de dessus d'un véhicule automobile équipé du dispositif anti-dévers conforme à l'invention.

La figure 2 représente sous forme de schéma-blocs une commande logique du dispositif anti-dévers de l'invention.

La figure 3 représente sous forme de schéma-blocs le bloc de commande détaillé, agencé pour satisfaire à une loi de commande de la commande logique de la figure 2.

Les figures 4 à 6 représentent l'une des électrovalves hydrauliques d'un vérin anti-dévers avant ou arrière à trois positions respectivement neutre lors du déplacement en ligne droite du véhicule, de travail lorsque le véhicule se déplace dans un virage à gauche et de travail lorsque le véhicule se déplace dans un virage à droite.

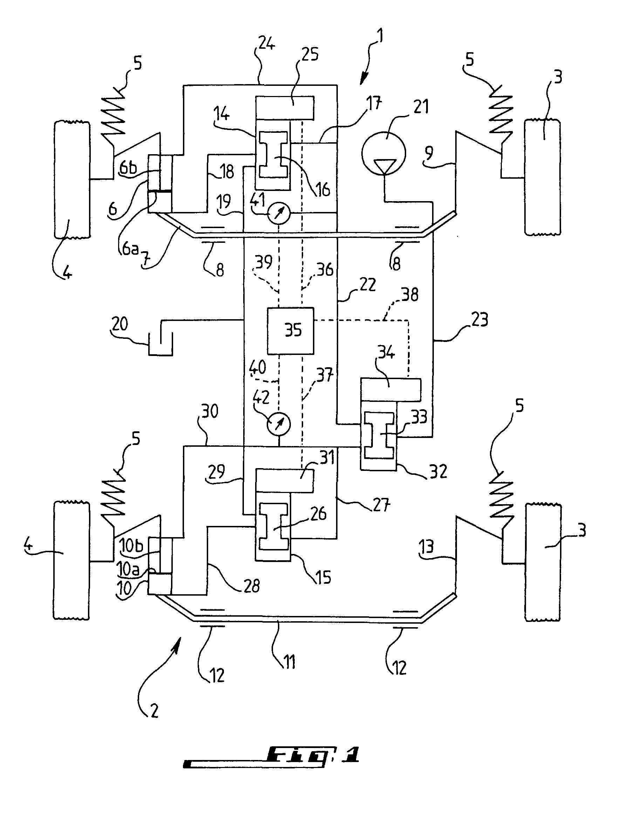

En se reportant à la figure 1, le véhicule automobile comprend un train avant 1 et un train arrière 2 comprenant chacun deux roues droite 3 et gauche 4 liées à la caisse du véhicule d'une part au moyen de bras, non représentés, montés oscillants par rapport à la caisse et d'autre part au moyen d'éléments de suspension 5 solidaires des roues.

Un vérin anti-dévers 6 est monté articulé sur la base de l'élément de suspension 5 de l'une 4 des roues avant et à l'une des extrémités d'une barre anti-dévers avant 7 disposée transversalement à la direction longitudinale du véhicule et montée rotative dans des paliers 8 solidaires de la caisse du véhicule. L'autre extrémité de la barre anti-dévers 7 est rigidement liée à la base de l'élément de suspension 5 de la roue droite 3 par exemple par l'intermédiaire d'une tige rigide 9.

Un second vérin anti-dévers 10 est monté articulé sur la base de l'élément de suspension 5 de l'une 4 des roues arrière et à l'une des extrémités d'une barre anti-dévers arrière 11 transversale au véhicule et montée rotative dans des paliers 12 solidaires de la caisse du véhicule. L'autre extrémité de la barre anti-dévers 11 est rigidement liée à la base de l'élément de suspension 5 de la roue droite 3 par exemple par l'intermédiaire d'une tige rigide 13.

Ainsi, les vérins 6, 10 sont associés respectivement aux roues droite avant et arrière et sont dits dissymétriques.

Des moyens de commande électrohydrauliques, qui seront définis ultérieurement, sont également prévus pour commander les vérins anti-dévers 6, 10 de façon à exercer à chaque train avant et arrière 1, 2 un couple anti-dévers sur la caisse du véhicule lorsque ce dernier se déplace en virage.

Selon l'invention, ces moyens de commande comprennent, par exemple, deux électrovalves hydrauliques avant 14 et arrière 15 raccordées respectivement aux deux vérins anti-dévers 6, 10. Plus précisément, l'électrovalve 14 comporte un tiroir 16 monté coulissant dans le corps de celle-ci et occupant une position neutre représentée à la figure 1, lorsque le véhicule se déplace en ligne droite, mettant en communication une conduite 17 d'entrée du liquide hydraulique sous pression raccordée au corps de l'électrovalve 14 avec deux conduites 18, 19 de sortie du liquide hydraulique sous pression raccordées au corps de l'électrovalve 14, la conduite de sortie 18 étant raccordée à la chambre inférieure du vérin 6 tandis que la conduite de sortie 19 est raccordée à un réservoir de liquide hydraulique 20. La conduite d'entrée 17 est reliée à une pompe haute pression à débit permanent 21 par l'intermédiaire de conduites 22, 23 du circuit hydraulique haute pression de cette pompe. La chambre supérieure du vérin 6 séparée de façon étanche de la chambre inférieure par le piston 6a de ce vérin et traversée par la tige de vérin 6b, est raccordée à la conduite 22 par l'intermédiaire d'une conduite 24. La référence 25 désigne la partie électrique de commande du déplacement du tiroir 16 de l'électrovalve 14.

L'électrovalve arrière 15 comprend également un tiroir 26 monté coulissant dans le boîtier de celle-ci et occupant une position neutre (représentée à la figure 1), lorsque le véhicule se déplace en ligne droite, mettant en communication une conduite 27 d'entrée du liquide hydraulique sous pression avec deux conduites 28, 29 de sortie du liquide sous pression, les conduites 27-29 étant bien entendu raccordées au corps de l'électrovalve 15. La conduite 27 est également reliée à la pompe haute pression 21 par l'intermédiaire de la conduite 23. La conduite 28 est reliée à la chambre inférieure du vérin 10 dont la chambre supérieure, séparée de manière étanche de la chambre inférieure par le piston 10a et traversée par la tige de vérin 10b, est reliée à la pompe haute pression 21 par l'intermédiaire d'une conduite 30 et de la conduite 23 du circuit hydraulique haute pression. L'électrovalve 15 comporte de plus une partie électrique 31 de commande du déplacement de son tiroir 26.

Dans ce mode de réalisation, les moyens de commande comprennent également une troisième électrovalve hydraulique 32 dite de répartition du débit du liquide hydraulique et comprenant un tiroir 33 monté coulissant dans le corps de l'électrovalve 32 et occupant normalement une position neutre représentée à la figure 1 de manière à mettre en communication la conduite 23 et les conduites 22 et 30. L'électrovalve 32 comprend également une partie électrique 34 de commande du déplacement de son tiroir 33.

Un moyen calculateur 35 permettant un contrôle actif du roulis du véhicule et de réaliser la fonction de répartition de l'anti-dévers comme on le verra ultérieurement, est relié électriquement par des liaisons électriques 36, 37, 38, symbolisées sur la figure 1 par des lignes en pointillés, respectivement aux parties électriques 25, 31, 34 de commande des électrovalves 14, 15, 32. Le moyen calculateur 35 reçoit également par deux lignes électriques 39, 40 respectivement deux valeurs de mesure de pression du liquide dans le circuit hydraulique anti-dévers avant et le circuit hydraulique anti-devers arrière. Ces valeurs de pression sont fournies, par exemple, d'une part par un capteur de pression 41 branché sur la conduite 22 et d'autre part par un capteur de pression 42 branché sur la conduite 30.

Ces mesures de pressions permettent au moyen calculateur 35 d'estimer les couples anti-dévers avant et arrière instantanés à l'aide des valeurs des sections des vérins anti-dévers 6, 10.

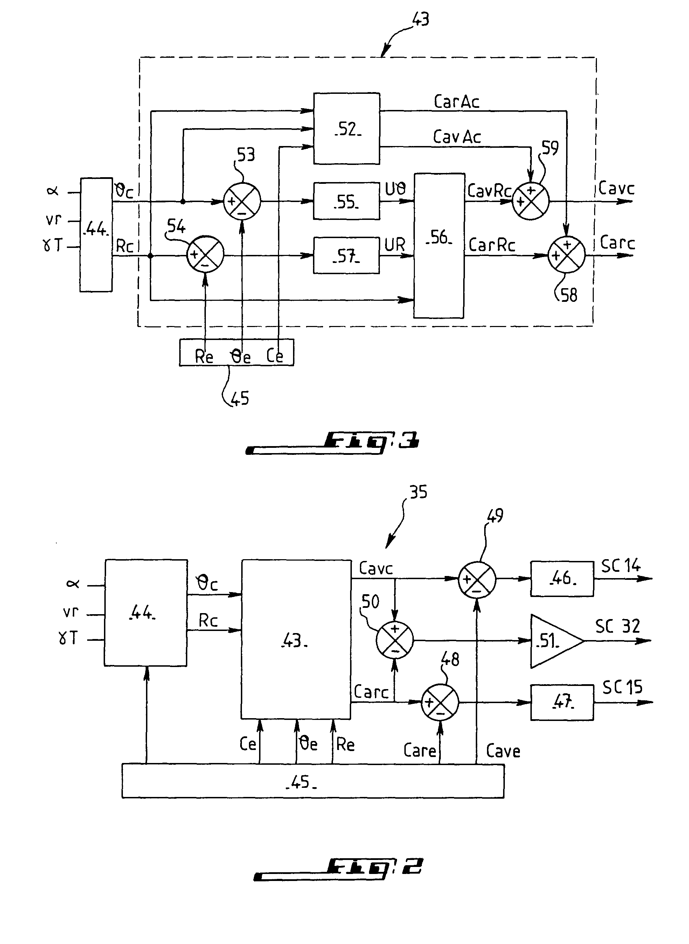

La figure 2 représente la structure logique du moyen calculateur 35 obéissant à une loi de commande, qui comprend un bloc logique de commande 43 de contrôle actif du roulis et de la répartition anti-dévers, laquelle reçoit sur deux entrées deux valeurs de consignes $\theta c$ de l'angle de roulis de la caisse du véhicule par rapport au plan des roues ou par rapport au sol et Rc du rapport des couples anti-dévers avant et arrière ou rapport anti-dévers. Ces valeurs de consignes $\theta c$ et Rc sont déterminées, de façon connue en soi, par un bloc logique 44 dit de stratégie à partir de moyens de détection des conditions de roulage du véhicule pouvant être constitués par exemple par un capteur de détection de l'angle $\alpha$ du volant de direction du véhicule, de la vitesse de rotation vr de ce volant et/ou de l'accélération transversale $\gamma T$ du véhicule.

La loi de commande contenue dans le bloc de commande 43 reçoit également sur trois entrées les valeurs d'estimation en temps réel du couple de roulis Ce, de l'angle de roulis $\theta e$ et du rapport anti-dévers Re fournies par un bloc d'estimation 45 qui contient les mesures provenant de moyens capteurs. A titre d'exemple, le couple de roulis instantané Ce peut être estimé à partir d'un capteur d'accélération latérale, l'angle de roulis instantané $\theta e$ peut être estimé à partir de capteurs de débattement, par exemple des triangles de suspension par rapport à la caisse, et le rapport anti-dévers instantané Re peut être déterminé à partir des capteurs de pression 41, 42 mentionnés en référence à la figure 1.

La loi de commande contenue dans le bloc 43 est agencée de façon à produire, lors du déplacement en virage du véhicule, une valeur de consigne de couple anti-dévers avant Cavc et une valeur de consigne de couple anti-dévers arrière Carc déterminées à partir des deux valeurs de consignes $\theta c$ et Rc. Ces deux valeurs de consignes Cavc et Carc sont appliquées respectivement à deux blocs correcteurs à action proportionnelle et dérivée 46 et 47 qui délivrent à leurs sorties respectivement des signaux électriques de commande SC14 et SC15 des deux électrovalves 14, 15. Le bloc 45 fournit également deux valeurs de couples anti-dévers estimés avant et arrière Cave et Care déterminées respectivement à l'aide des deux capteurs 41 et 42. Les valeurs des couples Cave et Care sont appliquées respectivement à deux circuits soustracteurs 48, 49 recevant également les deux valeurs de consignes Cavc et Carc. Ces valeurs Cavc et Carc sont également appliquées à deux entrées d'un circuit soustracteur 50 dont la sortie est reliée à l'entrée d'un bloc amplificateur 51 qui fournit un signal de commande SC32 à l'électrovalve 32 par l'intermédiaire de la ligne 38.

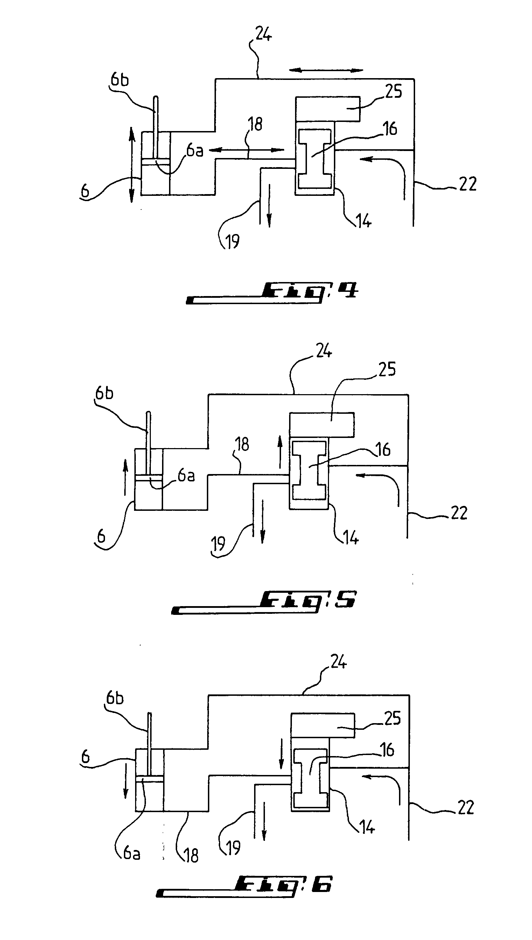

La figure 3 représente de façon détaillée le bloc de commande 43 permettant de produire les deux valeurs de consignes Cavc et Carc.

Cette commande comprend un bloc logique dit d'anticipation 52 ayant trois entrées recevant les deux valeurs de consignes θc et Rc du bloc de stratégie 44 et la valeur estimée Ce du couple de roulis. Les valeurs de consignes θc et Rc sont appliquées aux deux entrées positives de deux circuits soustracteurs 53, 54 dont les deux autres entrées négatives reçoivent les deux valeurs estimées en temps réel Re et θe. La sortie du circuit soustracteur 53 est reliée à l'entrée d'un circuit correcteur de roulis 55 dont la sortie est reliée à une entrée d'un bloc répartiteur 56. La sortie du circuit soustracteur 54 est reliée à l'entrée d'un circuit correcteur du rapport anti-dévers 57 dont la sortie est reliée à une autre entrée du bloc répartiteur 56. Une troisième entrée du bloc répartiteur 56 reçoit la valeur de consigne du rapport anti-dévers Rc.

Le bloc d'anticipation 52 fournit sur deux sorties respectivement deux valeurs de consigne anticipées d'un couple anti-dévers avant CavAc et d'un couple anti-dévers arrière CarAc qui sont appliquées à deux entrées de deux circuits additionneurs 58, 59.

Le bloc répartiteur 56 fournit sur deux sorties deux valeurs de consigne d'asservissement du couple anti-dévers avant CavRc et du couple anti-dévers arrière CarRc qui sont appliquées aux deux autres entrées des circuits additionneurs 58, 59 qui fournissent à leurs sorties les deux valeurs de consigne Cavc et Carc.

Les différents blocs décrits en référence à la figure 3 doivent posséder les caractéristiques ci-dessous.

Le bloc d'anticipation 52 fournit les valeurs

$$CavAc = Aav (θc, Rc, Ce, t)$$

et

$$CarAc = Aar (θc, Rc, Ce, t).$$

où : t désignant la variable temporelle,
Aav désignant la fonction anticipation avant
Aar désignant la fonction anticipation arrière

Pour des valeurs de θc, Rc et Ce constantes, le bloc 52 fournit :

$$CavAc = \frac{Rc \cdot (Ce + kAθ.θc)}{Rc + 1}$$

et où k désignant une constante

$$CarAc = \frac{Ce + kAθ. θc}{Rc + 1}$$

kAθ désignant la fonction de la situation de roulage du véhicule et indépendante de la variable t

Le bloc correcteur de roulis 55 fournit la valeur Uθ = Cθ (θc-θe, t). Ce circuit contient un terme intégrateur, c'est-à-dire que Uθ ne se stabilise que si θc-θe = 0.

Le bloc de correction du rapport anti-dévers 55 fournit la valeur UR = CR (Rc-Re, t). On rappelera que R = Cav/Car. Le bloc 57 contient également un terme intégrateur, c'est-à-dire que UR ne se stabilise que si Rc-Re = 0.

Le bloc de répartition 56 fournit CavRc = Rav (Uθ, UR, Rc) et CarRc = Rar (Uθ, UR, Rc). Ce bloc retourne alors :

$$CavRc = kRθ. \frac{Rc}{Rc + 1} .Uθ + kRR.UR$$

où kRθ etkRR fonctions de la situation de roulage et

$$CarRc = kRθ. \frac{1}{Rc + 1} .Uθ-kRR.UR.$$

indépendants de t

Le fonctionnement du bloc de commande 43 agencé pour satisfaire la loi de commande va être maintenant décrit.

Lors du déplacement en ligne droite du véhicule, la variable R du rapport du couple anti-dévers avant au couple anti-dévers arrière est indéfinie du fait que les couples anti-dévers avant et arrière sont nuls. Le dispositif anti-dévers est placé en état de veille et la commande 43 est inactive.

Lors du déplacement du véhicule en virage stabilisé, les blocs correcteurs de roulis 55 et du rapport anti-dévers 57 réalisent l'asservissement de l'angle de roulis θ et du rapport anti-dévers R à leur valeur de consigne, c'est-à-dire que θe = θc et Re = Rc. En effet, si θc, Rc, θe, Re et Ce sont des valeurs stabilisées, les valeurs de CavAc et CarAc aux sorties du bloc d'anticipation 52 sont constantes dans le temps d'après les propriétés de ce bloc et comme les couples anti-dévers aux trains avant et arrière sont constants dans le temps du fait que le couple de roulis C et le rapport anti-dévers R sont constants dans le temps, en supposant que les couples anti-dévers avant et arrière appliqués par les électrovalves 14, 15 de pilotage des vérins 6, 10 sont égaux aux valeurs de consigne Cave et Care, il s'ensuit que la somme des valeurs des couples anti-dévers de consigne fournis par le bloc répartiteur 56, c'est-à-dire CavRc + CarRc, est une constante dans le temps. Par conséquent, compte tenu des propriétés du bloc répartiteur 56, Uθ est une constante et comme le bloc correcteur de roulis 55 contient un terme intégrateur, on a θc = θe. Alors, compte tenu des propriétés du bloc répartiteur 56, comme CavRc = kR.UR et que CavRc est une valeur constante, la valeur UR est constante ; enfin, comme le bloc correcteur du rapport anti-dévers 57 contient un terme intégrateur, on a Rc = Re. Dans ces conditions, la caisse du véhicule est stabilisée à une position d'équilibre avec un angle de roulis égal à θc et un rapport anti-dévers égal à Rc. Il est à noter que l'état d'équilibre serait aussi atteint en l'absence du bloc d'anticipation 52.

Lors de phases transitoires correspondant au véhicule entrant dans un virage ou sortant de celui-ci, la détection de la sollicitation de la caisse du véhicule en virage, effectuée par l'intermédiaire de l'estimation de la valeur du couple de roulis instantanée Ce, intervient simultanément avec l'apparition du couple de roulis ou avant l'apparition de celui-ci par l'intermédiaire par exemple du capteur d'angle α du volant de direction, et donc avant la prise de roulis. Le retard entre la détection de la sollicitation et son effet est mis à profit par le bloc d'anticipation 52 dont les valeurs de consignes CavAc et CarAc qu'il fournit changent de valeurs avant la prise de roulis (alors que les valeurs Uθ et UR des blocs correcteurs de roulis et du rapport anti-dévers n'évoluent pas encore) et ces consignes permettent de "bloquer" la caisse en roulis, c'est-à-dire d'accomplir la fonction anti-dévers, en respectant la valeur de consigne du rapport anti-dévers Rc et en tenant compte de l'angle de consigne de roulis θc. Pendant cette phase initiale, la contribution des blocs correcteurs 55 et 57 est nulle. Comme l'estimation du couple instantané de roulis Ce est inexacte, les valeurs de consignes CavAc et CarAc conduisent à un équilibre du véhicule où θe est proche de θc et Re est proche de Rc avec des erreurs. Dans une seconde phase, les blocs correcteurs 55, 57 et le bloc répartiteur 56, par l'asservissement de θ et de R, font converger le dispositif vers l'équilibre où θe = θc et Re = Rc et la contribution de ces blocs est d'autant plus importante que l'estimation Ce du couple de roulis C est mauvaise. Bien entendu, le bloc d'anticipation 52, les circuits correcteurs 55, 57 et le bloc répartiteur 56 fonctionnent en parallèle et réagissent en permanence aux variations des consignes pendant tout le virage suite à la détection de nouvelles situations de roulage. Dès la fin du virage, la commande redevient inactive et le dispositif est replacé en état de veille.

Le fonctionnement global du dispositif anti-dévers de la figure 1 va être maintenant décrit en se référant également à la figure 2.

Lorsque le véhicule se déplace en ligne droite, la commande 43 est en état de veille et les électrovalves 14, 15, 32 sont en position de repos, dite position centrée, comme représenté en figure 4, à laquelle leurs tiroirs respectifs 16, 26, 33 laisse passer librement le débit du liquide hydraulique de la pompe 21, c'est-à-dire qu'un débit permanent traverse le circuit hydraulique avant et arrière du véhicule et aucune puissance utile n'est consommée. Aux pertes de charges en ligne prêt, la pression du liquide hydraulique dans tout le circuit est nulle et, en conséquence, aucun effort n'est exercé dans les vérins 6, 10. Dès lors, les roues droite et gauche d'un même train avant ou arrière du véhicule débattent indépendamment, le débattement relatif étant absorbé par le libre coulissement de la tige et du piston dans le vérin anti-dévers correspondant 6, 10. Le dispositif garantit alors un confort maximal des occupants du véhicule sur les inégalités droite-gauche de la route.

Lorsque le début du virage abordé par le véhicule est détecté, la commande 43 produit les valeurs de consigne Cavc et Carc non nulles. Les valeurs de pression mesurées par les capteurs 41 et 42 permettent d'estimer les couples anti-dévers instantanés Cave et Care à l'aide des sections des vérins anti-dévers 6, 10. Les deux blocs correcteurs à action proportionnelle et dérivée 46, 47 convertissent les erreurs résultant de la différence entre la valeur de consigne du couple anti-dévers avant Cavc et la valeur estimée du couple anti-dévers instantané Cave et de la différence entre la valeur de consigne du couple anti-dévers arrière Carc et la valeur estimée du couple anti-dévers arrière instantané Care en valeurs de commande SC14 et SC15 des électrovalves 14, 15 qui pilotent les vérins 6, 10 pour appliquer les couples anti-dévers avant et arrière, ainsi, ces deux circuits correcteurs réalisent l'asservissement des couples anti-dévers avant et arrière aux valeurs de consigne.

Si le virage abordé est à gauche, et comme représenté en figure 5 représentant uniquement l'un des ensembles vérin anti-dévers 6 et électrovalves associée 14, l'électrovalve 14 (ou l'électrovalve 15) est commandée par le signal de consigne SC14 (ou SC15) du bloc correcteur 46 (ou 47) de façon à déplacer le tiroir 16 (ou 26) vers le haut par rapport au boîtier 14, comme indiqué par la flèche correspondante à la figure 5, de sorte que ce tiroir réduit l'ouverture de passage du liquide vers le réservoir 20 à travers la conduite 19 (ou la conduite 29), faisant ainsi augmenter la pression dans les deux chambres du vérin 6 (ou du vérin 10). Ce vérin exerce alors un effort tendant à l'allonger, c'est-à-dire à déplacer la tige de vérin 6b vers le haut, par rapport au vérin 6, comme indiqué par la flèche correspondante en figure 5. L'allongement de ce vérin va pousser l'extrémité correspondante de la barre anti-dévers 7 (ou de la barre anti-dévers 11) vers le bas. Dès lors, une force importante vers le bas sera exercée sur la caisse du véhicule par l'intermédiaire du palier 8 (ou du palier 12) situé du côté du vérin 6 (ou du côté du vérin 10). Etant donné que la tige 6b - ou 10b - du vérin 6 (ou du vérin 10) est liée rigidement à la roue gauche 4 et que l'extrémité opposée de sa barre anti-dévers 7 est liée rigidement à la roue droite 3, il se produira un abaissement de la caisse du côté gauche avec une torsion accrue de la barre anti-dévers 7 (ou de la barre anti-dévers 11), ce qui provoquera le redressement en position sensiblement horizontale et parallèle au sol de la caisse. Autrement dit, la déformation de la barre anti-dévers 7 (ou de la barre anti-dévers 11) produit un couple anti-dévers s'exerçant sur la caisse du véhicule pour corriger son inclinaison provoquée par la force centrifuge en virage.

Si le virage est à droite, l'électrovalve 14 (ou l'électrovalve 15) est commandée par le signal SC14 (ou SC15) de manière à déplacer le tiroir 16 (ou le tiroir 26) vers le bas par rapport au corps 14 comme indiqué par la flèche en figure 6 et réduire ainsi l'ouverture d'entrée du conduit 17 (ou du conduit 27) de sorte que la pression de fluide augmente dans la conduite 24 et la chambre supérieure du vérin anti-dévers 6 (ou du vérin anti-dévers 10). Il en résultera un raccourcissement de ce vérin et l'extrémité adjacente de la barre anti-dévers 7 (ou de la barre anti-dévers 11) sera tirée vers le haut. Il se produira alors un soulèvement de la caisse avec redressement concomittant en position sensiblement horizontale et parallèle au sol de la caisse du véhicule. Autrement dit, l'effort dans le vérin correspondant déforme la barre anti-dévers associée, ce qui produit un couple anti-dévers s'exerçant sur la caisse du véhicule.

L'électrovalve de répartition 32 est commandée par le signal SC32 lorsque les valeurs de consigne des couples anti-dévers Cavc et Carc sont différentes de manière à faire monter la pression dans le circuit hydraulique de l'électrovalve 14 ou de l'électrovalve 15 afin de permettre la production de l'effort impliquant le déplacement du vérin anti-dévers 6 ou du vérin anti-dévers 10 et d'obtenir un effet survireur ou sous-vireur du véhicule conformément aux valeurs de consigne Cave et Care. Par exemple, si la valeur de consigne Carc est nulle et que la valeur de consigne Cavc est différente de zéro, l'électrovalve de répartition est commandée de manière à réduire l'ouverture vers le circuit hydraulique de l'électrovalve arrière 15, ce qui dirige le débit du fluide vers le circuit hydraulique avant de l'électro-valve 14. Autrement, si l'électrovalve de répartition 32 restait en position centrée représentée en figure 1, aucun effort ne serait produit dans le vérin anti-dévers 6 par le déplacement du tiroir de l'électrovalve 14, car tout le débit de fluide s'échapperait vers le réservoir 20 à travers le circuit hydraulique arrière de l'électrovalve 16 et la pression dans le circuit hydraulique avant resterait nulle.

Le dispositif anti-dévers de l'invention permet ainsi d'empêcher la prise de roulis d'un véhicule en virage (effet anti-dévers) et de garantir en même temps un comportement du véhicule adapté à la situation de roulage de celui-ci en contrôlant indépendamment les deux variables d'angle de roulis θ de la caisse du véhicule par rapport au sol et du rapport anti-dévers avant/arrière R.

## Revendications

1. Dispositif anti-dévers pour un véhicule automobile comprenant deux trains de roues respectivement avant (1) et arrière (2) liées à la caisse du véhicule d'une part au moyen de bras montés mobile par rapport à la caisse et d'autre part au moyen d'éléments de suspension (5), un premier actionneur (6) associé au train avant (1) permettant de produire un couple anti-dévers avant appliqué à la caisse (Cav), un deuxième actionneur (10) associé au train arrière (2) permettant de produire un couple anti-dévers arrière appliqué à la caisse, des moyens de commande pouvant agir sur les premier et second actionneurs anti-dévers (6, 10) pour exercer aux trains avant et arrière un couple anti-dévers lors du roulage du véhicule en virage, **caractérisé en ce qu'**un calculateur (35) agencé pour satisfaire une loi de commande fournit aux moyens de commande, constitués par deux électrovalves hydrauliques (14,15) raccordées respectivement aux premier et second actionneurs anti-dévers (6,10), deux signaux électriques de commande (SC14, SC15), chacun représentatif d'une valeur de consigne de couple anti-dévers (Cavc ; Carc) obtenu à partir de deux valeurs de consigne variable de l'angle de roulis (θc) de la caisse du véhicule et du rapport (Rc) entre le couple anti-dévers au train avant et le couple anti-dévers au train arrière, déterminées par des moyens de détection des conditions de roulage du véhicule, ce calculateur (35) comportant au moins deux blocs correcteurs (55, 57) et un bloc répartiteur (56) réalisant les asservissements de l'angle de roulis (θc) et du rapport (R) anti-dévers à leur valeur de consigne (θc et Rc), et **en ce qu'**il comprend une troisième électrovalve hydraulique de répartition (32) commandée par un signal électrique (SC32) formé à partir d'une différence des deux valeurs de consigne (Cavc, Carc) des couples anti-dévers avant et arrière de manière à augmenter la pression dans les circuits hydrauliques anti-dévers avant ou arrière selon la grandeur et le sens de la différence des deux valeurs de consignes des couples anti-dévers et obtenir un effet survireur ou sous-vireur d'amélioration de la stabilité en virage du véhicule.

2. Dispositif selon la revendication 1, **caractérisé en ce que** le calculateur (35) comporte au moins un bloc anticipateur (52).

3. Dispositif selon la revendication 1 ou 2, **caractérisé en ce qu'**il comprend un premier circuit correcteur à action proportionnelle et dérivée (46) convertissant la différence entre la valeur de consigne (Cavc) du couple anti-dévers avant et une valeur estimée (Cave), par exemple à partir d'un capteur de pression (41), d'un couple anti-dévers instantané, en signal électrique (SC14) de commande de l'électrovalve hydraulique (14) et un second circuit correcteur à action proportionnelle et dérivée (47) convertissant la différence entre la valeur de consigne (Carc) du couple anti-dévers arrière et une valeur estimée (Care), par exemple à partir d'un autre capteur de pression (42), en signal électrique (SC15) de commande de l'électrovalve hydraulique arrière (15).

4. Dispositif selon la revendication 3, **caractérisé en ce qu'**il comprend un circuit soustracteur (50) des deux valeurs de consignes (Cavc, Carc) de couples anti-dévers avant et arrière et délivrant le signal électrique (SC32) de commande de la troisième électrovalve hydraulique (32).

5. Dispositif anti-dévers pour un véhicule automobile comprenant deux trains de roues respectivement avant (1) et arrière (2) liées à la caisse du véhicule d'une part au moyen de bras montés oscillants autour d'un axe par rapport à la caisse et d'autre part au moyen d'éléments de suspension (5), un premier vérin anti-dévers (6) monté articulé sur l'élément de suspension (5) de l'une des roues avant et à l'une des extrémités d'une barre anti-dévers avant (7) transversale au véhicule, un second vérin anti-dévers (11) monté articulé sur l'élément de suspension (5) de l'une des roues arrière et à l'une des extrémités d'une barre anti-dévers arrière (11) transversale au véhicule, des moyens de commande hydraulique pouvant commander les premier et second vérins anti-dévers (6, 10) pour exercer aux trains avant et arrière un couple anti-dévers lors d'un mouvement relatif des bras par rapport à la caisse, les moyens de commande comprenant deux électrovalves hydrauliques (14, 15) raccordées respectivement aux premier et second vérins anti-dévers (6, 10) et un moyen calculateur (35) fournissant aux deux électrovalves hydrauliques (14, 15) deux signaux électriques de commande (SC14, SC15), chacun représentatif d'une valeur de consigne de couple anti-dévers (Cavc, Carc) déterminés à partir de deux valeurs de consignes variables de l'angle de roulis ($\theta$c) de la caisse du véhicule et d'un rapport (R) entre le couple anti-dévers au train avant et le couple anti-dévers au train arrière déterminées par des moyens de détection des conditions de conduite du véhicule tels que des capteurs de détection de l'angle ($\alpha$) du volant de direction, de la vitesse de rotation (vr) de ce volant et/ou de l'accélération transversale ($\gamma$t) du véhicule, de façon à piloter les deux vérins anti-dévers (6,10) pour qu'ils appliquent respectivement deux couples anti-dévers avant et arrière, pouvant être différents, à la caisse du véhicule, le dispositif anti-dévers étant **caractérisé en ce qu'**il comprend une troisième électrovalve hydraulique de répartition (32) commandée par un signal électrique (SC32) formé à partir d'une différence des deux valeurs de consigne (Cavc, Carc) des couples anti-dévers avant et arrière de manière à augmenter la pression dans les circuits hydrauliques anti-dévers avant ou arrière selon la grandeur et le sens de la différence des deux valeurs de consignes des couples anti-dévers et obtenir un effet survireur ou sous-vireur d'amélioration de la stabilité en virage du véhicule.

6. Dispositif selon la revendication 5, **caractérisé en ce qu'**il comprend un premier circuit correcteur à action proportionnelle et dérivée (46) convertissant la différence entre la valeur de consigne (Cavc) du couple anti-dévers avant et une valeur estimée (Cave), par exemple à partir d'un capteur de pression (41), d'un couple anti-dévers instantané, en signal électrique (SC14) de commande de l'électro-valve hydraulique (14) et un second circuit correcteur à action proportionnelle et dérivée (47) convertissant la différence entre la valeur de consigne (Carc) du couple anti-dévers arrière et une valeur estimée (Care), par exemple à partir d'un autre capteur de pression (42), en signal électrique (SC15) de commande de l'électrovalve hydraulique arrière (15).

7. Dispositif selon la revendication 6 ou 7, **caractérisé en ce qu'**il comprend un circuit soustracteur (50) des deux valeurs de consignes (Cavc, Carc) de couples anti-dévers avant et arrière et délivrant le signal électrique (SC32) de commande de la troisième électrovalve hydraulique (32).

**Claims**

1. Antiroll device for a motor vehicle comprising two wheel trains, front (1) and back (2) respectively, connected to the body of the vehicle on the one hand by means of fitted arms, which are mobile in relation to the body, and on the other hand by means of suspension elements (5), a first actuator (6) associated with the front train (1) allowing a front antiroll torque applied to the body (Cav) to be produced, a second actuator (10) associated with the rear train (2) allowing a rear antiroll torque applied to the body to be produced, means of control being able to act on the first and second antiroll actuators (6, 10) to exercise an antiroll torque on the front and rear trains when driving the vehicle round a bend, **characterised by** the fact that a calculator (35), equipped to comply with a control law, supplies the means of control, made up of two hydraulic solenoid valves (14, 15) connected to the first and second actuator (6, 10) respectively, with two electric control signals (SC14, SC15), each representing an antiroll torque index value (Cavc; Carc) obtained from two variable index values for the rolling angle (2c) of the body of the vehicle and the ratio (Rc) between the antiroll torque of the front train and the antiroll torque of the rear train, determined by means of detecting the driving conditions of the vehicle, this calculator (35) having at least two corrector blocks (55, 57) and a distributor block (56) providing subservience of the rolling angle (2c) and antiroll ratio (R) to their index value (2c and Rc) and by the fact that it comprises a third hydraulic solenoid distribution valve (32) controlled by an electric signal (SC32) formed from a difference between the two index values (Cavc, Carc) of the front and rear antiroll torques so as to increase the pressure in the front or rear antiroll hydraulic circuits according to the size and direction of the difference in the two index values for the antiroll torques and obtain an oversteer or understeer effect to improve stability of the vehicle round a bend.

**2.** Device according to claim 1, **characterised by** the fact that the calculator (35) has at least one anticipator block (52).

**3.** Device according to claim 1 or 2, **characterised by** the fact that it comprises a first corrector circuit with derivated and proportional action (46), converting the difference between the index value (Cavc) of the front antiroll torque and an estimated value (Cave), for example from a pressure sensor (41), from an instant antiroll torque into an electric signal (SC14) controlling the hydraulic solenoid valve (14) and a second corrector circuit with derivated and proportional action (47), converting the difference between the index value (Carc) of the rear antiroll torque and an estimated value (Care), for example from another pressure sensor (42), into an electric signal (SC15) controlling the rear hydraulic solenoid valve (15).

**4.** Device according to claim 3, **characterised by** the fact that it comprises a subtractor circuit (50) for the two index values (Cavc, Carc) of the front and rear antiroll torques and supplying the electric signal (SC32) controlling the third hydraulic solenoid valve (32).

**5.** Antiroll device for a motor vehicle comprising two wheel trains, front (1) and rear (2) respectively, connected to the body of the vehicle on the one hand by means of fitted arms oscillating around an axis in relation to the body and on the other hand by means of suspension elements (5), a first antiroll power cylinder (6) fitted so it is articulated on the suspension elements (5) of one of the front wheels and at one end of a front antiroll bar (7) transverse to the vehicle, a second antiroll power cylinder (11) fitted so it is articulated on the suspension element (5) of one of the rear wheels and at one end of a rear antiroll bar (11) transverse to the vehicle, hydraulic means of control being able to control the first and second antiroll power cylinders (6, 10) to exercise an antiroll torque on the front and rear trains during movement relating to the arms in relation to the body **characterised by** the means of control comprising two hydraulic solenoid valves (14, 15) connected to the first and second power cylinders (6, 10) respectively and a means of calculation (35) supplying the two hydraulic solenoid valves (14, 15) with two electric control signals (SC14, SC15), each representing an antiroll torque index value (Cavc, Carc) determined from two variable index values for the rolling angle (2) of the body of the vehicle and a ratio (R) between the antiroll torque of the front train and the antiroll torque of the rear train, determined by means of detecting the driving conditions of the vehicle, such as sensors detecting the angle (V) of the steering wheel, the speed of rotation (vr) of this wheel and/or the transverse acceleration ((t) of the vehicle, so as to manage the two antiroll power cylinders (6, 10) so that they apply two antiroll torques, front and rear respectively, which can be different, to the body of the vehicle, the antiroll device being < - 7) in that it comprises a third hydraulic solenoid distribution valve (32) controlled by an electric signal (SC32) formed from a difference in the two index values (Cavc, Carc) of the front and rear antiroll torques so as to increase the pressure in the front and rear antiroll hydraulic circuits according to the size and direction of the difference in the two index values of the antiroll torques and obtain an oversteer or understeer effect to improve the stability of the vehicle on a bend.

**6.** Device according to claim 5, **characterised by** the fact that it comprises a first corrector circuit with derivated and proportional action (46), converting the difference between the index value (Cavc) of the front antiroll torque and an estimated value (Cave), for example from a pressure sensor (41), from an instant antiroll torque into an electric signal (SC14) controlling the hydraulic solenoid valve (14) and a second corrector circuit with derivated and proportional action (47), converting the difference between the index value (Carc) of the rear antiroll torque and an estimated value (Care), for example from another pressure sensor (42) into an electric signal (SC15) controlling the rear hydraulic solenoid valve (15).

**7.** Device according to claim 6 or 7, **characterised by** the fact that it comprises a subtractor circuit (50) for the two index values (Cavc, Carc) of the front and rear antiroll torques and supplying the electric signal (SC32) controlling the third hydraulic solenoid valve (32).

**Patentansprüche**

**1.** Antirollvorrichtung für ein Kraftfahrzeug mit zwei Achssätzen, nämlich einem vorderen (1) und einem hinteren (2), die einerseits mittels zum Fahrzeugaufbau beweglich angeordneter Lenker und andererseits mittels Aufhängungselementen (5) mit dem Fahrzeugaufbau verbunden sind, einem ersten Betätigungsorgan (6), das dem vorderen Radsatz (1) zugeordnet ist, wodurch ein an den Fahrzeugaufbau (Cav) angelegtes, vorderes Antirollmoment erzeugt werden kann, einem zweiten Betätigungsorgan (10), das dem hinteren Radsatz (2) zugeordnet ist, wodurch ein an den Fahrzeugaufbau angelegtes hinteres Antirollmoment erzeugt werden kann, Steuermitteln, die auf das erste und auf das zweite Antirollbetätigungsorgan (6, 10) einwirken können, um in Kurvenfahrt des Fahrzeugs ein Antirollmoment auf den vorderen und hinteren Radsatz auszuüben, **dadurch gekennzeichnet, dass** ein Rechner (35) zum Erfüllen einer Steuerregel den Steuermitteln, die aus zwei, an das erste bzw. an das zweite Antirollbetätigungsorgan (6, 10) angeschlossenen hydraulischen Magnetventilen (14, 15) bestehen, zwei elektrische Steuersignale (SC14, SC15) ausgibt, von denen jedes einen Sollwert des Antirollmoments (Cavc; Carc) darstellt, die aus zwei variablen Sollwerten des Wankwinkels (θc) des Fahrzeugaufbaus und der Beziehung (Rc) zwischen dem Antirollmoment des vorderen Radsatzes und dem Antirollmoment des hinteren Radsatzes erhalten wird, die durch Mittel zum Erfassen der Fahrbedingungen des Fahrzeugs bestimmt werden, wobei dieser Rechner (35) zumindest zwei Korrekturblöcke (55, 57) und einen Verteilerblock (56) enthält, die Regelungen des Wankwinkels (θc) und der Antirollbeziehung (R) auf deren Sollwerte (θc und Rc) durchführen, und dass sie ein drittes hydraulisches Verteilermagnetventil (32) enthält, das durch ein elektrisches Signal (SC32) gesteuert wird, das aus einer Differenz der beiden Sollwerte (Cavc, Carc) des vorderen bzw. hinteren Antirollmoments gebildet wird, so dass der Druck im vorderen bzw. hinteren Antirollhydraulikkreis in Abhängigkeit von der Größe und der Richtung der Differenz der beiden Sollwerte des Antirollmoments erhöht wird und ein Übersteuerungs- oder Untersteuerungseffekt zum Verbessern der Kurvenstabilität des Fahrzeugs erhalten wird.

2.  Vorrichtung nach Anspruch 1, **dadurch gekennzeichnet, dass** der Rechner (35) zumindest einen Antizipierblock (52) enthält.

3.  Vorrichtung nach Anspruch 1 oder 2, **dadurch gekennzeichnet, dass** sie einen ersten Korrekturkreis mit proportional abgeleiteter Wirkung (46) umfasst, der die Differenz zwischen dem Sollwert (Cavc) des vorderen Antirollmoments und einem Schätzwert (Cave) eines momentanen Antirollmoments beispielsweise aus einem Drucksensor (41) in ein elektrisches Signal (SC14) zum Steuern des hydraulischen Magnetventils (14) umwandelt, und einen zweiten Korrekturkreis mit proportional abgeleiteter Wirkung (47) enthält, der die Differenz zwischen dem Sollwert (Carc) des hinteren Antirollmoments und einem Schätzwert (Care), beispielsweise aus einem weiteren Drucksensor (42), in ein elektrisches Signal (SC15) zum Steuern des hinteren hydraulischen Magnetventils (15) umwandelt.

4.  Vorrichtung nach Anspruch 3, **dadurch gekennzeichnet, dass** sie einen Subtrahierer (50) der beiden Sollwerte (Cavc, Carc) des vorderen bzw. hinteren Antirollmoments enthält, der das elektrische Signal (SC32) zum Steuern des dritten hydraulischen Magnetventils (32) ausgibt.

5.  Antirollvorrichtung für ein Kraftfahrzeug mit zwei Achssätzen, nämlich einem vorderen (1) und einem hinteren (2), die einerseits mittels zum Fahrzeugaufbau um eine Achse schwenkbar angeordneter Lenker und andererseits mittels Aufhängungselementen (5) mit dem Fahrzeugaufbau verbunden sind, einem ersten Antirollkraftzylinder (6), der gelenkig am Aufhängungselement (5) des einen Vorderrads und an dem einen Ende eines quer zum Fahrzeug verlaufenden vorderen Stabilisators (7) gelagert ist, und einem zweiten Antirollkraftzylinder (11), der gelenkig am Aufhängungselement (5) des einen Hinterrads und an dem einen Ende eines quer zum Fahrzeug verlaufenden hinteren Stabilisators (11) gelagert ist, hydraulischen Steuermitteln, die den ersten und den zweiten Antirollkraftzylinder (6, 10) steuern können, um bei einer Relativbewegung der Lenker zum Fahrzeugaufbau ein Antirollmoment auf den vorderen und hinteren Radsatz auszuüben, wobei die Steuermittel zwei, an den ersten bzw. an den zweiten Antirollkraftzylinder (6, 10) angeschlossene hydraulische Magnetventilen (14, 15) enthalten und ein Rechenmittel (35) den beiden hydraulischen Magnetventilen (14, 15) zwei elektrische Steuersignale (SC14, SC15) ausgibt, von denen jedes einen Sollwert des Antirollmoments (Cavc; Carc) darstellt, welche Signale aus zwei variablen Sollwerten des Wankwinkels (θc) des Fahrzeugaufbaus und der Beziehung (R) zwischen dem Antirollmoment am vorderen Radsatz und dem Antirollmoment am hinteren Radsatz bestimmt werden, die durch Mittel zum Erfassen der Fahrbedingungen des Fahrzeugs bestimmt werden, wie etwa Sensoren zum Erfassen des Winkels (α) des Lenkrads, der Drehgeschwindigkeit (vr) dieses Lenkrads und/oder der Querbeschleunigung (γt) des Fahrzeugs, so dass die beiden Antirollkraftzylinder (6, 10) angesteuert werden, damit sie an den Fahrzeugaufbau ein vorderes und ein hinteres Antirollmoment anlegen, die voneinander verschieden sein können, wobei die Antirollvorrichtung **dadurch gekennzeichnet ist, dass** sie ein drittes hydraulisches Verteilermagnetventil (32) enthält, das durch ein elektrisches Signal (SC32) gesteuert wird, das aus einer Differenz der beiden Sollwerte (Cavc, Carc) des vorderen bzw. hinteren Antirollmoments gebildet wird, so dass der Druck im vorderen bzw. hinteren Antirollhydraulikkreis in Abhängigkeit von der Größe und der Richtung der Differenz der beiden Sollwerte der Antirollmomente erhöht wird und ein Übersteuerungs- oder Untersteuerungseffekt zum Verbessern der Kurvenstabilität des Fahrzeugs erhalten wird.

6. Vorrichtung nach Anspruch 5, **dadurch gekennzeichnet, dass** sie einen ersten Korrekturkreis mit proportional abgeleiteter Wirkung (46) umfasst, der die Differenz zwischen dem Sollwert (Cavc) des vorderen Antirollmoments und einem Schätzwert (Cave) eines momentanen Antirollmoments beispielsweise aus einem Drucksensor (41) in ein elektrisches Signal (SC14) zum Steuern des hydraulischen Magnetventils (14) umwandelt, und einen zweiten Korrekturkreis mit proportional abgeleiteter Wirkung (47) enthält, der die Differenz zwischen dem Sollwert (Carc) des hinteren Antirollmoments und einem Schätzwert (Care) beispielsweise aus einem weiteren Drucksensor (42) in ein elektrisches Signal (SC15) zum Steuern des hinteren hydraulischen Magnetventils (15) umwandelt.

7. Vorrichtung nach Anspruch 6 oder 7, **dadurch gekennzeichnet, dass** sie einen Subtrahierer (50) der beiden Sollwerte (Cavc, Carc) des vorderen bzw. hinteren Antirollmoments enthält, der das elektrische Signal (SC32) zum Steuern des dritten hydraulischen Magnetventils (32) ausgibt.

Fig. 1

_Fig.3_

_Fig.2_

Fig. 4

Fig. 5

Fig. 6